# FASCICULE DE BREVET EUROPEEN

(11) **EP 3 392 791 B1**
(45) Date de publication et mention de la délivrance du brevet: **23.10.2019**
(21) Numéro de dépôt: 18167875.6
(22) Date de dépôt: 18.04.2018
(51) Int. Cl.: G06F 21/52, G06F 12/14, G06F 8/61, G06F 9/30, G06F 9/455, G06F 21/53, G06F 21/56, G06F 16/23

(54) **PROCÉDÉ D'EXÉCUTION D'UN PROGRAMME DESTINÉ À ÊTRE INTERPRÉTÉ PAR UNE MACHINE VIRTUELLE PROTÉGÉE CONTRE DES ATTAQUES PAR INJECTION DE FAUTE**
VERFAHREN ZUR AUSFÜHRUNG EINES PROGRAMMS, DAS ZUR INTERPRETATION DURCH EINE VIRTUELLE MASCHINE BESTIMMT IST, DIE GEGEN ANGRIFFE DURCH FEHLER-INJEKTION GESCHÜTZT IST
METHOD FOR EXECUTING A PROGRAM INTENDED FOR BEING INTERPRETED BY A VIRTUAL MACHINE PROTECTED AGAINST FAULT-INJECTION ATTACKS

(30) Priorité: 20.04.2017 FR 1753434
(43) Date de publication de la demande: 24.10.2018
(73) Titulaire: Idemia Identity & Security France, 92400 Courbevoie (FR)
(72) Inventeur: SERE, Ahmadou, 92130 Issy Les Moulineaux (FR); AMMOUCHE, Karim Madjid, 92130 Issy Les Moulineaux (FR)
(74) Mandataire: Regimbeau

(56) Documents cités:
- US-A1- 2006 112 241
- US-A1- 2011 202 739

## Description

### DOMAINE DE L'INVENTION

La présente invention concerne un procédé d'exécution d'un programme destiné à être interprété par une machine virtuelle.

La présente application trouve avantageusement application dans des dispositifs électroniques tels que des cartes à puce.

### ETAT DE LA TECHNIQUE

De façon connue, une attaque par injection de faute consiste à perturber l'environnement physique d'un dispositif électronique, de sorte à modifier des données mémorisées par le dispositif. De telles perturbations peuvent être produites de différentes manières : variation d'une tension d'alimentation, variation d'une fréquence d'horloge du dispositif, émission de rayonnement électromagnétique ou laser, etc.

Ces données peuvent par exemple être des instructions de code d'un programme destiné à être exécuté par un processeur d'un tel dispositif électronique. Dans ce cas, l'injection de faute revient à injecter du code malicieux.

Certains programmes sont plus particulièrement destinés à être interprétés par une machine virtuelle, qui est elle-même un programme exécuté par un processeur.

Le processeur est apte à interpréter du code machine. De façon connue, une machine virtuelle a pour fonction d'interpréter à l'aide de code machine des instructions de code de plus haut niveau.

On connaît du document US 20110258397 un procédé permettant de protéger des objets manipulés par une machine virtuelle contre des attaques par injection de faute. Toutefois, ce procédé ne permet pas d'empêcher l'interprétation par une machine virtuelle de code malicieux.

Le document US 8,893,275 décrit par ailleurs un procédé dans lequel il est vérifié que des instructions de code peuvent être interprétées ou non en du code machine par une machine virtuelle. Pour cela, il est proposé de faire appel, dans un programme destiné à être interprété par une machine virtuelle, à des instructions spéciales comprenant des sécurités additionnelles. Par exemple, au lieu de faire appel à l'instruction invokespecial définie dans la norme Java Card, on fait appel en vertu de ce principe à une instruction invokespecial_bis qui met en œuvre des tests de sécurité. Ce procédé a cependant pour inconvénient majeur de devoir modifier en profondeur le format des instructions de code du programme. Le document US 2011/202739 décrit un procédé permettant d'empêcher l'exécution d'une instruction provenant d'une partie de mémoire correspondant à un mode utilisateur lorsque le processeur opère dans un mode privilégié, tel qu'un mode noyau.

### RESUME DE L'INVENTION

Un but de l'invention est d'éviter qu'une machine virtuelle n'interprète du code malicieux, sans pour autant devoir modifier le format des instructions de code de programmes destinés à être interprétés par une telle machine virtuelle.

Il est ainsi proposé, selon un premier aspect de l'invention, un procédé d'exécution d'un programme destiné à être interprété par une machine virtuelle, le procédé comprenant des étapes de :
- détermination d'une instruction de code de référence à interpréter au cours de l'exécution du programme,
- lecture de données de droits d'interprétation indiquant une portion du programme contenant des instructions de code interprétables par la machine virtuelle,
- sur la base des données lues, contrôle de présence de l'instruction de code de référence dans la portion du programme,
- interprétation, par la machine virtuelle, de l'instruction de code de référence à l'aide de code machine, seulement si l'instruction de code de référence est contenue dans la portion du programme.

Le procédé selon le premier aspect de l'invention peut en outre comprendre les caractéristiques suivantes prises seules ou en combinaison lorsque cela est techniquement possible.

Dans un mode de réalisation, le contrôle de présence est mis en œuvre pour chaque instruction de code de référence déterminée comme étant à interpréter au cours de l'exécution du programme. Ceci a pour effet d'assurer un très haut niveau de sécurité.

Dans un autre mode de réalisation, le procédé comprend la vérification d'au moins une condition susceptible d'être remplie ou non par l'instruction de code de référence ; le contrôle de présence est alors mis en œuvre seulement si la condition est remplie. Ceci permet de réduire la consommation additionnelle de ressources matérielles par la mise en œuvre des étapes du procédé comparativement au mode de réalisation précédent.

La condition peut notamment être remplie lorsque :
- l'instruction de code de référence est une instruction de saut depuis un premier bloc de base de programme vers un autre bloc de base de programme, telle qu'une instruction de branchement, une instruction d'invocation de méthode, ou une instruction de retour de méthode, ou
- l'instruction de code de référence est une instruction d'écriture dans une mémoire non volatile, ou
- le programme étant exécuté dans un dispositif électronique, l'instruction de code de référence participe à une communication de données entre le dispositif électronique et un autre dispositif.

Ces types d'instruction de code sont particulièrement critiques en termes de sécurité. Il est donc particulièrement judicieux de limiter la mise en œuvre du contrôle de présence à de telles instructions de code.

L'étape de contrôle de présence peut être mise en œuvre ou non en fonction d'un résultat d'un tirage aléatoire. Ceci permet de rendre imprévisible ce contrôle de présence ; un attaquant a donc alors plus de difficultés à comprendre et contourner les mesures de sécurité procurées par le procédé selon le premier aspect de l'invention.

Le procédé selon le premier aspect peut en outre comprendre des étapes de :
- lecture, dans les données de droits d'interprétation, de données de localisation adaptées pour localiser la portion du programme,
- lecture, dans les données de droits d'interprétation, d'une donnée d'intégrité relative aux données de localisation,
- contrôle d'intégrité des données de localisation sur la base de la donnée d'intégrité, l'instruction de code de référence étant interprétée seulement s'il est déterminé au cours du contrôle d'intégrité que les données de localisation sont intègres.

Ces étapes permettent de détecter une éventuelle corruption par un attaquant des données de droits d'interprétation elles-mêmes en vue de contourner les mesures de sécurité procurées par le procédé.

Les données de droits d'interprétation peuvent faire partie intégrante du programme et peuvent comprendre des données de localisation adaptées pour localiser la portion du programme au sein du programme. De la sorte, ces données de droits d'interprétation sont directement utilisables depuis plusieurs plateformes d'installation du programme.

Le procédé peut comprendre un signalement d'une erreur lorsque l'instruction de code de référence n'est pas dans la portion du programme.

L'étape de contrôle de présence peut être mise en œuvre par la machine virtuelle, la machine virtuelle étant elle-même exécutée par au moins un processeur. Alternativement, l'étape de contrôle de présence est mise en œuvre par un circuit différent de ce processeur (ou chacun de ces processeurs lorsqu'il y en a plusieurs). Ainsi, une partie de la charge de travail additionnelle requise par le procédé selon le premier aspect est déléguée à ce circuit ; par conséquent, le ou chaque processeur peut exécuter la machine virtuelle sans être ralenti de façon importante.

Il est également proposé, selon un deuxième aspect de l'invention, une machine virtuelle comprenant des instructions de code de programme pour l'exécution des étapes du procédé selon le premier aspect de l'invention, lorsque ce procédé est exécuté par au moins un processeur.

Il est également proposé, selon un troisième aspect de l'invention, un dispositif électronique, tel qu'une carte à puce, comprenant :
- au moins un processeur configuré pour exécuter une machine virtuelle selon le deuxième aspect de l'invention,
- au moins un programme destiné à être interprété par la machine virtuelle.

Il est également proposé, selon un quatrième aspect de l'invention, un procédé d'installation d'un programme destiné à être interprété par une machine virtuelle dans une mémoire non volatile, le procédé comprenant des étapes de :
- décomposition du programme en une première portion comprenant des instructions de code interprétable par la machine virtuelle et une portion restante,
- lecture de données de droits d'interprétation indiquant à la machine virtuelle que seules des instructions de code contenues dans une zone prédéterminée de la mémoire non volatile sont autorisées à être interprétées à l'aide de code machine par la machine virtuelle,
- mémorisation de la première portion de programme dans la zone prédéterminée de la mémoire non volatile,
- mémorisation de la portion restante du programme dans une zone différente de la zone prédéterminée.

Si une portion d'un autre programme contenant des instructions de code interprétables par la machine virtuelle, dite troisième portion de programme, est déjà présente dans la mémoire non volatile, alors la première portion de programme peut être mémorisée de manière adjacente à la troisième portion de programme. Ceci permet de réduire la fragmentation de la mémoire non volatile.

Il est également proposé, selon un cinquième aspect de l'invention, un installeur comprenant des instructions de code de programme pour l'exécution des étapes du procédé selon le quatrième aspect de l'invention, lorsque ce procédé est exécuté par au moins un processeur.

Il est également proposé, selon un sixième aspect de l'invention, un procédé de génération d'un programme destiné à être interprété par une machine virtuelle, comprenant des étapes de
- génération d'une portion de programme contenant des instructions de code interprétables par la machine virtuelle,
- génération de données de droits d'interprétation configurées pour indiquer à la machine virtuelle que seules les instructions de code contenues dans la portion de programme sont autorisées à être interprétées par la machine virtuelle à l'aide de code machine pour exécuter le programme.

Il est également proposé, selon un septième aspect de l'invention, un produit programme d'ordinateur destiné à être interprété par une machine virtuelle, comprenant :
- une portion de programme contenant des instructions de code interprétables par la machine virtuelle,
- des données de droits d'interprétation configurées pour indiquer à la machine virtuelle que seules les instructions de code contenues dans la portion du programme sont autorisées à être interprétées par la machine virtuelle à l'aide de code machine pour exécuter le programme.

Les données de droits d'interprétation du programme selon le septième aspect de l'invention peuvent comprendre des données de localisation adaptées pour localiser la portion du programme au sein du programme, et une donnée d'intégrité relative aux données de localisation de la portion de programme.

En particulier, le produit programme d'ordinateur selon le septième aspect de l'invention peut être une applet Java Card. Dans ce cas, la portion du programme indiquée dans les données de droits d'interprétation peut être un composant de l'applet de type « method_component ».

En outre, les données de droits d'interprétation utilisées dans l'un ou l'autre des différents aspects de l'invention peut comprendre des données de localisation adaptées pour localiser la portion du programme au sein du programme, et les données de localisation de la portion comprendre une adresse de début de la portion de programme et/ou une adresse de fin de la portion de programme.

### DESCRIPTION DES FIGURES ANNEXEES

D'autres caractéristiques, buts et avantages de l'invention ressortiront de la description qui suit, qui est purement illustrative et non limitative, et qui doit être lue en regard des dessins annexés sur lesquels :
- La figure 1 représente schématiquement un dispositif électronique selon un mode de réalisation de l'invention.
- La figure 2, représente schématiquement une mémoire du dispositif schématiquement représenté en figure 1 contenant plusieurs programmes.

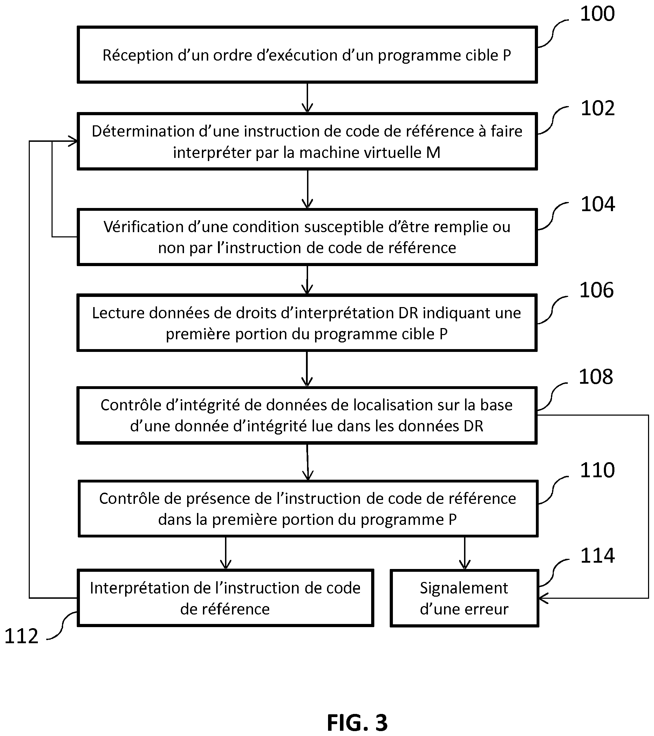

- La figure 3 est un organigramme d'étapes du procédé d'exécution d'un programme selon un mode de réalisation de l'invention.
- Les figures 4, 5 et 6 représentent le contenu d'une mémoire du dispositif à des instants différents, au cours de la mise en œuvre d'un procédé d'installation d'un programme dans cette mémoire.

Sur l'ensemble des figures, les éléments similaires portent des références identiques.

### DESCRIPTION DETAILLEE DE L'INVENTION

### Dispositif électronique protégé contre des attaques par injection de faute

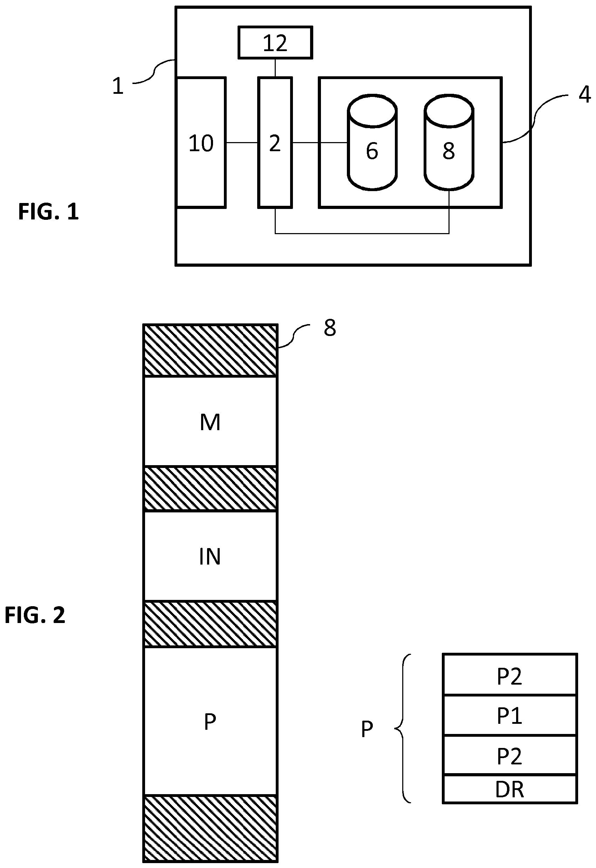

En référence à la **figure 1**, un dispositif électronique 1 comprend au moins un processeur 2 et au moins une mémoire 4.

Le ou chaque processeur 2 est adapté pour interpréter directement des instructions de code de programme appartenant à un jeu d'instructions de code prédéterminées.

La mémoire 4 comprend au moins une mémoire volatile 6, par exemple de type RAM. La mémoire volatile 6 a pour fonction de mémoriser temporairement des données, par exemple des données calculées par le processeur 2. Le contenu de la mémoire volatile 6 est effacé lors d'une mise hors tension du dispositif électronique 1.

La mémoire 4 comprend en outre au moins une mémoire non volatile 8 (NVM en anglais), par exemple de type disque dur, SSD, flash, EEPROM, etc. La mémoire non volatile 8 a pour fonction de mémoriser des données de manière persistante, au sens où une mise hors tension du dispositif électronique 1 n'efface pas le contenu de la mémoire non volatile 8.

Le dispositif électronique 1 comprend par ailleurs une interface de communication 10 avec un dispositif tiers, extérieur au dispositif électronique 1. Cette interface de communication 10 peut comprendre un circuit de communication sans fil, par exemple une puce NFC, de sorte à établir un canal de communication radio entre le dispositif électronique et le dispositif tiers, et/ou comprendre au moins un port destiné à être mis en contact physique avec au moins un port du dispositif tiers, de sorte que des signaux électriques porteurs de données puissent être transférés entre les ports mis en contact physique.

Le dispositif électronique peut également comprendre un circuit de contrôle 12 distinct du processeur, et dont la fonction sera décrite plus loin.

Le dispositif électronique 1 est par exemple une carte à puce, telle qu'une carte SIM. Le dispositif tiers peut être par exemple un terminal utilisateur, tel qu'un smartphone.

En référence à la **figure 2**, est mémorisée dans la mémoire non volatile 8 une machine virtuelle M.

La machine virtuelle M est un programme codé à l'aide de code machine, et donc susceptible d'être exécuté par au moins un processeur 2.

La machine virtuelle M a comme fonction d'interpréter à l'aide de code machine des instructions de code de haut niveau appartenant à un jeu d'instructions différent du jeu d'instructions de code machine.

Dans la suite du présent document, le terme « instruction de code » désigne implicitement une instruction de code de haut niveau destinée à être interprétée par la machine virtuelle M, tandis que « code machine » désigne une ou plusieurs instructions de code directement interprétables par le ou chaque processeur.

On verra dans la suite que la mémoire non volatile 8 est également apte à mémoriser au moins un programme P, dit programme cible P, destiné à être interprété par la machine virtuelle M.

Dans la suite, on prendra l'exemple non limitatif d'une machine virtuelle M Java Card. Elle est alors configurée pour interpréter du « bytecode » d'une applet ayant été préalablement générée à partir d'un code source dans le langage de programmation Java, qui est un langage de programmation orienté objet.

Est par ailleurs mémorisé dans la mémoire non volatile 8 un installeur IN de programmes interprétables par la machine virtuelle M.

L'installeur IN est lui-même un programme susceptible d'être exécuté par au moins un processeur 2.

**Génération d'un programme cible P destiné à être interprété par une machine virtuelle M**

Un programme cible P destiné à être interprété par la machine virtuelle M peut être généré à partir de code source au moyen des étapes suivantes.

Le code source est écrit dans le langage de programmation Java, qui est un langage de programmation orienté objet.

Le code source comprend au moins un fichier source suffixé en « .java ».

Un compilateur Java connu en lui-même génère sur la base de chaque fichier source un fichier de classe correspondant, suffixé en « .class ».

Un convertisseur également connu en lui-même génère sur la base des fichiers de classes au moins une applet P interprétable par la machine virtuelle M.

L'applet P comprend un fichier d'applet suffixé en « .cap » (ce suffixe signifiant « converted applet ») dont le contenu est conforme à au chapitre 6 de la spécification « Java Card 2.1.1 Virtual Machine Specification ».

Est généré par le convertisseur dans le fichier d'applet une première portion P1 de programme comprenant des instructions de code interprétables par la machine virtuelle M.

La première portion P1 de programme est typiquement contenue dans une structure method_component détaillée dans la partie 6.9 de ladite spécification. La première portion P1 de programme peut être cette structure ou bien la table methods [ ] contenue dans cette structure.

La première portion P1 comprend au moins un ensemble d'instructions de codes définissant une méthode du programme, typiquement plusieurs ensembles d'instructions de code définissant des méthode respectives du programme.

Une méthode peut elle-même comprendre un ou plusieurs blocs de base (« basic block » en anglais). Un bloc de base est constitué d'une suite d'instructions de codes d'un seul tenant, destinées à être exécutées consécutivement.

Par ailleurs, le convertisseur génère dans le fichier d'applet au moins une deuxième portion de programme P2 ne comprenant pas d'instruction de code interprétable par la machine virtuelle M, mais d'autres types de données, par exemple des constantes destinées à être lues la machine virtuelle M au cours de l'exécution de l'applet.

De façon non conventionnelle, le convertisseur génère par ailleurs des données de droits d'interprétation DR. Ces données de droits d'interprétation sont configurées pour indiquer à la machine virtuelle M que seules des instructions de code contenues dans la première portion P1 de programme sont autorisées à être interprétées par la machine virtuelle M à l'aide de code machine pour exécuter le programme.

Les données de droits d'interprétation comprennent des données de localisation adaptées pour localiser la première portion P1 au sein du programme.

Ces données de localisation comprennent par exemple une adresse de début de la première portion P1 du programme, ainsi qu'une adresse de fin de la première portion P1 du programme (cette adresse de fin pouvant être remplacée par une taille de la première portion P1 du programme).

L'adresse de fin peut être l'adresse de la dernière instruction de code se trouvant dans la première portion P1 du programme ou bien être l'adresse qui suit immédiatement l'adresse de cette dernière instruction de code. Dans la suite, on supposera que l'adresse de fin est l'adresse de la dernière instruction de code se trouvant dans la première portion P1.

Les adresses de début et de fin peuvent être des adresses relatives à une adresse de référence du programme. Autrement dit, elles sont représentatives d'un écart entre cette adresse de référence et le début ou la fin de la première portion P1 au sein du programme. Alternativement, les adresses de début et de fin peuvent être des adresses absolues dans la mémoire non volatile 8.

Les données de droits d'interprétation DR comprennent par ailleurs une donnée d'intégrité relative aux données de localisation.

Pour générer cette donnée d'intégrité, le convertisseur applique une fonction d'intégrité F prédéterminée aux données de localisation, telle qu'une fonction de hachage, une fonction générant un code de redondance longitudinal (« longitudinal redundancy check » ou LRC en anglais), une fonction générant un code de redondance cyclique (« cyclic redundancy check » ou CRC en anglais), etc.

Les données de droits d'interprétation DR sont mémorisées au sein du programme P à un emplacement localisable par l'installeur IN ou à la machine virtuelle M.

Les données de droits d'interprétation DR sont par exemple incluses dans un fichier d'applet et comprennent un identifiant propre à ces données permettant à la machine virtuelle M ou l'installeur IN de distinguer ces données de droits d'interprétation des autres données contenu dans le fichier d'applet. En variante, les données de droits d'interprétation sont mémorisées dans un fichier dédié.

La génération du programme cible P est typiquement mis en œuvre par un dispositif différent du dispositif électronique, par exemple un ordinateur de bureau ou un serveur.

Le tableau 1 ci-dessus illustre un exemple de méthode d'un programme cible P.

**Tableau 1 - Exemple de méthode Java**

| Code source Java | Mnémonique | | Byte code |
|---|---|---|---|
| Static short foo ( | L0: | sload_0 // | 0x8000: 1C |
| short x ) | x==Localvar #0 | | 0x8001: 61 05 |
| { | | ifne L1 | 0x8003: 11 64 |
| if ( x==0 ) | | sspush 100 | 0x8005: 78 |
| return 100; | | sreturn | 0x8006: 1C |
| else | L1: | sload_0 | 0x8007: 04 |
| return foo(x-1 ) + | | sconst_1 | 0x8008: 43 |
| 20; | | ssub | 0x8009: 8B 80 00 |
| } | | invokevirtual<foo> | 0x800C: 11 14 |
| | | sspush 20 | 0x800E: 41 |
| | | sadd | 0x800F: 78 |
| | | sreturn | |

La colonne de gauche du tableau 1 montre le code source d'une méthode foo en langage Java. Les instructions de code correspondantes générées par le compilateur et le convertisseur que l'on retrouve dans un fichier d'applet sont représentées (en hexadécimal) avec leurs adresses respectives dans la colonne de droite du tableau 1. Chaque instruction de code Java Card est appelée « opcode » dont la valeur et la taille en nombre de bits sont spécifiées dans la spécification Java Card susmentionnée. La colonne du milieu du tableau 1 montre les mnémoniques correspondant à ces instructions de code.

Par exemple, la première instruction de code définissant la méthode foo a un opcode de valeur hexadécimale égale à 1C (dans cet exemple, cette instruction se trouvant à l'adresse absolue 0x8000). Cet opcode est appelé « sload 0 » et charge, lors de son interprétation par la machine virtuelle M, le contenu d'une première variable locale au sommet d'une pile d'exécution gérée par la machine virtuelle M (dans cet exemple, cette variable est le paramètre x de la méthode foo).

Dans la suite on supposera de manière fictive et par souci de simplicité que la première portion P1 du programme ne contient que les instructions de code de la méthode foo. Les données de droits d'interprétation comprennent donc une adresse de début égale à 0x8000, une adresse de fin égale à 0x800F (adresse de la dernière instruction de code sreturn ayant pour valeur hexadécimale 78).

### Installation d'un programme cible P destiné à être interprété par une machine virtuelle M dans une mémoire d'un dispositif électronique

Le dispositif 1 reçoit, via son interface de communication 10, le programme cible P destiné à être installé. Le programme cible P est par exemple téléchargé depuis un serveur d'applications par le dispositif tiers et transféré au dispositif électronique 1 via cette interface de communication 10.

Le programme cible P est mémorisé de façon temporaire dans la mémoire volatile 6 du dispositif électronique 1.

Le programme est ensuite mémorisé dans la mémoire non volatile 8 du dispositif électronique 1 de manière conventionnelle.

Le programme cible P est alors prêt à être exécuté dans le dispositif électronique 1.

Les données de droits d'interprétation peuvent être générées par l'installeur IN et non le compilateur ou le convertisseur. Pour cela, l'installeur IN utilise sa connaissance du format .cap pour détecter au sein du programme reçu via l'interface de communication la première portion P1 de programme (le composant method_component). L'installeur IN détermine l'adresse de début et l'adresse de fin de cette première portion P1 et calcule le cas échéant la donnée d'intégrité relative à ces adresses.

### Exécution de programme cible au moyen de la machine virtuelle

Le processeur 2 démarre l'exécution de la machine virtuelle M, par exemple lors d'une mise sous tension du dispositif électronique 1.

Ultérieurement, la machine virtuelle M reçoit un ordre de lancement du programme cible P (étape 100). Dans le présent texte, on considère que l'exécution du programme cible P débute lorsqu'un ordre d'exécution de ce programme est reçu au sein du dispositif électronique 1.

La machine virtuelle M ouvre un fichier d'applet du programme cible P et y localiser la première portion P1 de programme contenant les instructions de code du programme à interpréter.

La machine virtuelle M dispose d'un pointeur de code (« Program Counter » en anglais, ou PC) qui va indexer le bytecode et d'une pile (« stack » en anglais). Cette pile est adressée au travers d'un pointeur de pile (« Stack Pointer » en anglais ou SP).

Pour exécuter une méthode, la machine virtuelle M alloue une zone de la mémoire volatile 6 réservée à la méthode, cette zone étant appelée trame (« frame » en anglais). La trame à une taille correspondant au nombre de mots utiles au stockage d'informations de contexte, des arguments de la méthode et ainsi que le nombre d'emplacement de la pile nécessaire à l'exécution de toutes les instructions de code (opcodes) faisant partie de la méthode.

Ensuite, pour chaque opcode de la méthode, la machine virtuelle M dépile les éléments nécessaires à l'exécution de cet opcode en s'appuyant sur ses arguments et empiler le résultat correspondant dans la pile. La machine virtuelle M met ensuite à jour le PC, avant de passer à l'interprétation de l'instruction suivante.

Au cours de l'exécution du programme cible P, la machine virtuelle M détermine une instruction de code de référence à interpréter à l'aide de code machine (étape 102).

Cette détermination 102 comprend une lecture d'une adresse dans le pointeur de code PC : à cette adresse se trouve l'instruction de code de référence à interpréter.

La machine virtuelle M localise par ailleurs les données de droits d'interprétation DR du programme cible P et lit leur contenu (étape 106). La machine virtuelle M lit en particulier les données de localisation.

Sur la base des données de droits d'interprétation DR lues, la machine virtuelle M contrôle la présence ou non de l'instruction de code de référence dans la première portion P1 du programme cible P (étape 110).

Le contrôle de présence comprend d'une part une comparaison entre le pointeur de code (c'est-à-dire l'adresse de l'instruction de code de référence se trouvant dans le pointeur de code) et l'adresse de début lue dans les données de localisation. Le contrôle de présence comprend d'autre part une comparaison entre le pointeur de code et l'adresse de fin lue dans les données de localisation.

L'instruction de code est présente dans la première portion P1 du programme cible P lorsque :
- l'adresse de l'instruction de code de référence est supérieure ou égale à l'adresse de début, et
- l'adresse de l'instruction de code de référence est inférieure ou égale à l'adresse de fin (ou strictement inférieure à l'adresse de fin dans le cas où l'adresse de fin est l'adresse qui suit immédiatement l'adresse de la dernière instruction de code de la première portion P1).

Dans un premier cas, il est déterminé au cours du contrôle de présence que l'instruction de code de référence n'est pas présente dans la première portion P1 du programme. Dans ce premier cas, l'instruction de code de référence n'est pas interprétée par la machine virtuelle M à l'aide de code machine ; la machine virtuelle M signale plutôt une erreur (étape 114). Ce signalement comprend typiquement la levée d'une exception de sécurité par la machine virtuelle M.

Par ailleurs, dans ce premier cas, la machine virtuelle M stoppe préférentiellement l'exécution du programme.

Dans un deuxième cas, il est déterminé au cours du contrôle de présence 110 que l'instruction de code est bien présente dans la première portion P1 du programme. Dans ce deuxième cas, l'instruction de code de référence est interprétée par la machine virtuelle M à l'aide de code machine (étape 112). Cette étape 112 d'interprétation est connue de l'homme du métier. Pour une instruction de code lue dans un fichier d'applet, une ou plusieurs instructions de code machine correspondantes sont exécutées par le processeur 2.

Toujours dans le deuxième cas, la machine virtuelle M met ensuite à jour le pointeur de code PC et détermine une instruction de code suivante à exécuter, en répétant l'étape 102.

L'étape de contrôle de présence 110 peut être pour plusieurs instructions de code déterminées comme étant à interpréter au cours de l'exécution du programme par la machine virtuelle M. La manière dont cette étape de contrôle de présence 110 est répétée peut faire l'objet de plusieurs variantes.

Dans une première variante, l'étape 110 de contrôle de présence est répétée pour chaque instruction de code déterminée comme étant à interpréter au cours d'une mise en œuvre de l'étape 102, c'est-à-dire sur la base de chaque nouvelle adresse chargée dans le pointeur de code au cours de cette exécution.

La méthode foo détaillée dans le tableau 1 est interprétée de la manière suivante par la machine virtuelle M dans cette première variante (les lignes en gras sont les traitements non conventionnels mis en œuvre par la machine virtuelle M, tandis que les autres lignes sont des traitements classiques) :
1. La machine virtuelle M crée une trame pour la méthode foo.
2. La machine virtuelle M charge l'adresse 0x8000 dans le pc.
**3. La machine virtuelle M vérifie que le PC est compris entre 0x8000 et 0x800F ; si oui, elle poursuit l'interprétation ; sinon, la machine virtuelle M lève une exception de sécurité**
4. La machine virtuelle M exécute l'opcode sload_0 qui charge le contenu de la première variable locale au sommet de la pile, ici il s'agit du paramètre X de la méthode foo.
5. La machine virtuelle M incrémente le PC de 1, lequel prend alors la valeur 0x8001.
**6. La machine virtuelle M vérifie que le PC est compris entre 0x8000 et 0x800F ; si oui, elle poursuit l'interprétation ; sinon, la machine virtuelle M lève une exception de sécurité**
7. La machine virtuelle M exécute l'opcode if ne qui teste si la valeur se trouvant au sommet de la pile est égale à 0
8. Si oui, la machine virtuelle M incrémente le PC de 2 et
9. Si non, la machine virtuelle M ajoute au PC la valeur de l'argument de l'opcode ifne, ici 0x05, pour passer à 0x8006.
**10. La machine virtuelle M vérifie que le PC est compris entre 0x8000 et 0x800F ; si oui, elle poursuit l'interprétation ; sinon, la machine virtuelle M lève une exception de sécurité**
11. Cette opération se répète jusqu'à rencontrer un des opcode sreturn de la méthode.
12. La machine virtuelle M retourne ensuite à la méthode qui a appelé foo.
13. Etc.

Dans une deuxième variante, l'étape 110 de contrôle de présence n'est mise en œuvre pour une instruction de référence que si cette instruction de référence remplit au moins une condition prédéterminée (cette condition étant vérifiée au cours d'une étape 104). Ceci permet de réduire la charge de calcul additionnelle consommée par l'étape de contrôle de présence.

Cette condition peut être le résultat d'un tirage aléatoire mis en œuvre pour l'instruction de code de référence. Autrement dit, l'étape de contrôle de présence est mise en œuvre ou non, de manière aléatoire.

Alternativement, ou à titre complémentaire, le contrôle de présence peut être mise en œuvre lorsqu'au moins une des conditions suivantes est remplie :
- l'instruction de code de référence est une instruction de saut depuis un premier bloc de base de programme vers un autre bloc de base de programme, telle qu'une instruction de branchement, une instruction d'invocation de méthode, ou une instruction de retour de méthode, ou
- l'instruction de code de référence est une instruction d'écriture dans une mémoire non volatile 8, ou
- le programme étant exécuté dans un dispositif électronique, l'instruction de code de référence participe à une communication de données avec un dispositif différent du dispositif électronique.

Ces types d'instruction de code sont particulièrement critiques en termes de sécurité. Il est donc particulièrement avantageux de limiter l'étape de contrôle à ces types d'instruction de code.

L'étape de contrôle de présence 110 peut être mise en œuvre par la machine virtuelle M. Toutefois, une telle étape de contrôle de présence consomme des ressources processeur 2, et ce de façon particulièrement importante lorsque le contrôle de présence 110 est mis en œuvre pour chaque instruction de code de référence déterminée comme étant à interpréter par la machine virtuelle M, conformément à la première variante proposée ci-dessus. Pour décharger le processeur 2, l'étape de contrôle de présence 110 est avantageusement déléguée au circuit de contrôle 12. Par exemple, la machine virtuelle M lit une seule fois les données de localisation de la première portion P1 depuis la mémoire non volatile 8 et transmet les adresses de début et de fin au circuit de contrôle 12 au lancement du programme cible P, avant la mise en œuvre de l'étape de contrôle de présence 17. Plus tard, le circuit de contrôle 12 met en œuvre le contrôle de présence 110 en compare le pointeur de code avec les adresses que la machine virtuelle M lui a fournies au lancement du programme cible P.

Par ailleurs, si les données de droits d'interprétation DR comprennent une donnée d'intégrité relative à ces données de localisation, cette donnée d'intégrité est également lue par la machine virtuelle M au cours de l'étape 106. La machine virtuelle M contrôle alors l'intégrité des données de localisation à l'aide de la donnée d'intégrité (étape 108).

Le contrôle d'intégrité 108 comprend l'application de la fonction F prédéterminée aux données de localisation lues, de sorte à générer une deuxième donnée d'intégrité, puis une comparaison entre la donnée d'intégrité lue et la deuxième donnée d'intégrité générée. Si les deux données d'intégrité comparées sont différentes, alors les données de localisation sont considérées non intègres. Il est possible en particulier que le dispositif électronique 1 ait subi une attaque ayant eu pour effet de corrompre les données de localisation mémorisées dans le dispositif électronique. Dans ce cas l'étape 110 est mise en œuvre. Si les deux données d'intégrité comparées sont égales, alors les données de localisation sont intègres. Le procédé passe alors à l'étape 110.

L'étape 108 de contrôle d'intégrité peut être mis en œuvre avant l'interprétation 112 de chaque instruction de code de référence déterminée comme étant à interpréter au cours de l'étape 102. En variante, l'étape de contrôle d'intégrité108 est mise en œuvre seulement lorsque l'étape de contrôle de présence 110 est mise en œuvre pour une instruction de code de référence.

### Autres modes de réalisation

Dans le mode de réalisation décrit précédemment, le programme cible P installé dans le dispositif électronique dispose de données de droits d'interprétation DR qui lui sont propres, et pouvant même en faire partie intégrante. Si plusieurs programmes cibles sont installés dans le dispositif 1, chaque programme cible installé dispose de ses propres données DR.

Dans un deuxième mode de réalisation, qui va être à présent décrit, les données de droits d'interprétation DR ne font pas partie intégrante d'un programme cible P mais sont plutôt partagées entre plusieurs programmes cibles installés dans le dispositif électronique 1. Ceci permet de limiter la mémoire additionnelle consommée par les données de droit d'interprétation DR.

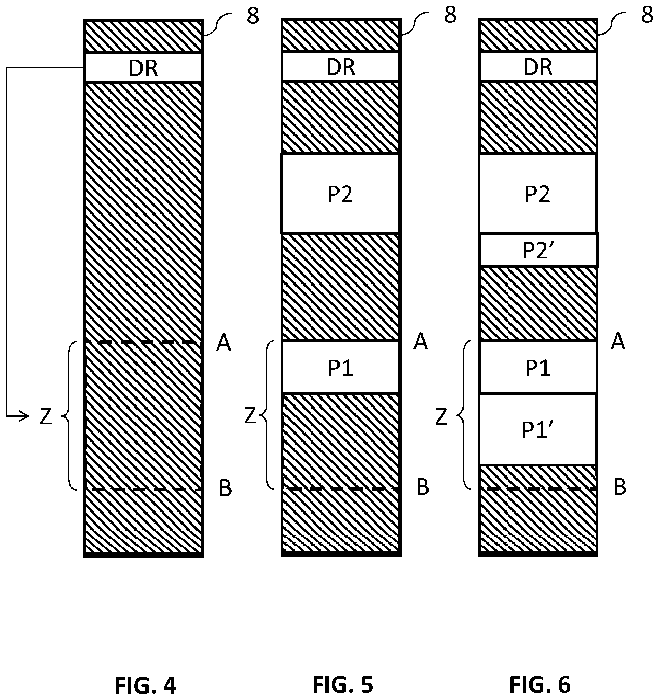

En référence à la **figure 4** relative à ce deuxième mode de réalisation, les données de droits d'interprétation DR indiquent à la machine virtuelle M que seules des instructions de code contenues dans une zone prédéterminée Z de la mémoire non volatile 8 sont autorisées à être interprétées à l'aide de code machine par la machine virtuelle M.

Les données de droits d'interprétation comprennent des données de localisation adaptées pour localiser la zone prédéterminée Z dans la mémoire non volatile 8.

Ces données de localisation comprennent par exemple une adresse de début A de la zone prédéterminée Z dans la mémoire non volatile 8, ainsi qu'une adresse de fin B de cette zone prédéterminée Z (cette adresse de fin pouvant être remplacée par une taille de la zone prédéterminée).

Les données de droits d'interprétation DR peuvent également comprendre une donnée d'intégrité relative aux à la zone prédéterminée de la mémoire non volatile 8, calculée d'une manière similaire au premier mode de réalisation.

Les données de droits d'interprétation DR sont mémorisées dans la mémoire non volatile 8 avant l'installation d'un quelconque programme cible P.

On suppose dans un premier temps que la zone prédéterminée de la mémoire non volatile 8 est vide, comme cela est représenté sur la figure 4, et qu'aucun programme cible P n'a encore été installé dans le dispositif électronique.

L'installeur IN décompose le programme cible P en sa première portion P1 et la portion restante P2.

L'installeur IN lit les données de droits d'interprétation depuis la mémoire volatile 6 pour déterminer où se trouve dans la zone prédéterminée Z.

En référence à la **figure 5**, l'installeur IN commande la mémorisation de la première portion P1 de programme dans la zone prédéterminée Z de la mémoire non volatile 8.

L'installeur IN commande par ailleurs la mémorisation de la portion restante du programme dans une zone de la mémoire non-volatile différente de la zone prédéterminée.

Ensuite, l'installeur IN met à jour les données de droits d'interprétation.

Cette mise à jour comprend une mise à jour de la valeur d'intégrité relative à la zone.

Si la première portion P1 du programme cible P n'est pas totalement incluse dans la zone prédéterminée (par exemple par ce que sa taille est plus grande que la taille de la zone prédéterminée), la zone indiquée dans les données de localisation est étendue de sorte à couvrir la première portion P1. Cette extension se traduit typiquement par une augmentation de la valeur de l'adresse de fin des données de localisation.

Ultérieurement, le dispositif électronique reçoit via son interface de communication un deuxième programme cible P à installer, le deuxième programme cible P' étant également destiné à être interprété par la machine virtuelle M.

Les étapes de décomposition et de mémorisation sont répétées : une première portion P1' contenant des instructions de code du deuxième programme cible P' est mémorisée dans la zone prédéterminée Z, et une portion restante P2 du deuxième programme est mémorisée ailleurs dans la mémoire virtuelle.

La première portion P1 de référence est mémorisée de façon adjacente à la première portion P1 du premier programme cible P déjà présente dans la zone prédéterminée de la mémoire non volatile 8. Ceci permet de limiter la fragmentation de la mémoire.

Si la première portion P1 du programme cible P n'est pas totalement incluse dans la zone prédéterminée (parce que la taille cumulée de la première portion P1 du premier programme cible P et de la première portion P1 du deuxième programme cible P est plus grande que la taille de la zone prédéterminée), la zone Z indiquée dans les données de localisation est étendue de sorte à couvrir les deux premières portions P1 et P1'. Cette extension se traduit typiquement par une augmentation de la valeur de l'adresse de fin B des données de localisation.

Les étapes du procédé d'exécution sont similaires à celles du premier mode de réalisation, à ceci près que les données de droits de localisation ne sont pas lues par la machine virtuelle M depuis un fichier .cap.

## Revendications

1. Procédé d'exécution d'un programme (P) destiné à être interprété par une machine virtuelle (M), le procédé comprenant des étapes de :
• détermination (102) d'une instruction de code de référence à interpréter au cours de l'exécution du programme,
• interprétation (112), par la machine virtuelle, de l'instruction de code de référence à l'aide de code machine,
le procédé étant **caractérisé en ce qu'**il comprend des étapes de
• lecture (106) de données de droits d'interprétation (DR) indiquant une portion du programme (P1) contenant des instructions de code interprétables par la machine virtuelle,
• sur la base des données lues, contrôle de présence (110) de l'instruction de code de référence dans la portion (P1) du programme (P), l'interprétation de l'instruction de code de référence étant mise en œuvre par la machine virtuelle (M) seulement si l'instruction de code de référence est contenue dans la portion (P1) du programme (P).

2. Procédé selon la revendication 1, dans lequel le contrôle de présence (110) est mis en œuvre pour chaque instruction de code de référence déterminée (102) comme étant à interpréter au cours de l'exécution du programme.

3. Procédé selon la revendication 1, comprenant une vérification (104) d'au moins une condition susceptible d'être remplie ou non par l'instruction de code de référence, dans lequel le contrôle de présence (110) est mis en œuvre seulement si la condition est remplie.

4. Procédé selon la revendication 3, dans lequel la condition est remplie lorsque :
• l'instruction de code de référence est une instruction de saut depuis un premier bloc de base de programme vers un autre bloc de base de programme, telle qu'une instruction de branchement, une instruction d'invocation de méthode, ou une instruction de retour de méthode, ou
• l'instruction de code de référence est une instruction d'écriture dans une mémoire non volatile (8), ou
• le programme étant exécuté dans un dispositif électronique (1), l'instruction de code de référence participe à une communication de données entre le dispositif électronique (1) et un autre dispositif.

5. Procédé selon la revendication 1, dans lequel l'étape de contrôle de présence (110) est mise en œuvre ou non en fonction d'un résultat d'un tirage aléatoire.

6. Procédé selon l'une des revendications précédentes, comprenant des étapes de :
• lecture, dans les données de droits d'interprétation (DR), de données de localisation adaptées pour localiser la portion du programme,
• lecture, dans les données de droits d'interprétation (DR), d'une donnée d'intégrité relative aux données de localisation,
• contrôle d'intégrité (108) des données de localisation sur la base de la donnée d'intégrité, l'instruction de code de référence étant interprétée (112) seulement s'il est déterminé au cours du contrôle d'intégrité que les données de localisation sont intègres.

7. Procédé selon l'une des revendications 1 à 6, dans lequel la machine virtuelle (M) est exécutée par au moins un processeur (2), et dans lequel l'étape de contrôle de présence (110) est mise en œuvre par un circuit (12) différent de chaque processeur (2).

8. Machine virtuelle (M) comprenant des instructions de code de programme pour l'exécution des étapes du procédé selon l'une des revendications 1 à 7, lorsque ce procédé est exécuté par au moins un processeur (2).

9. Dispositif électronique (1), tel qu'une carte à puce, comprenant :
• au moins un processeur (2) configuré pour exécuter une machine virtuelle (M) selon la revendication précédente,
• au moins un programme (P) destiné à être interprété par la machine virtuelle (M).

10. Procédé d'installation d'un programme (P) destiné à être interprété par une machine virtuelle selon la revendication 8 (M) dans une mémoire non volatile (8), le procédé comprenant des étapes de :
• décomposition du programme (P) en une première portion (P1) comprenant des instructions de code interprétable par la machine virtuelle et une portion restante (P2),
• lecture de données de droits d'interprétation (DR) indiquant à la machine virtuelle que seules des instructions de code contenues dans une zone prédéterminée (Z) de la mémoire non volatile (8) sont autorisées à être interprétées à l'aide de code machine par la machine virtuelle (M),
• mémorisation de la première portion (P1) de programme dans la zone prédéterminée (Z) de la mémoire non volatile (8),
• mémorisation de la portion restante (P2) du programme dans une zone différente de la zone prédéterminée (Z).

11. Installeur (IN) comprenant des instructions de code de programme pour l'exécution des étapes du procédé selon la revendication 10, lorsque ce procédé est exécuté par au moins un processeur (2).

12. Procédé de génération d'un programme (P) destiné à être interprété par une machine virtuelle selon la revendication 8 (M), comprenant des étapes de
• génération d'une portion (P1) de programme contenant des instructions de code interprétables par la machine virtuelle (M),
• génération de données de droits d'interprétation configurées pour indiquer à la machine virtuelle (M) que seules les instructions de code contenues dans la portion (P1) de programme sont autorisées à être interprétées par la machine virtuelle à l'aide de code machine pour exécuter le programme (P).

13. Produit programme d'ordinateur (P) destiné à être interprété par une machine virtuelle selon la revendication 8 (M), comprenant :
• une portion (P1) de programme contenant des instructions de code interprétables par la machine virtuelle (M),
• des données de droits d'interprétation (DR) configurées pour indiquer à la machine virtuelle (M) que seules les instructions de code contenues dans la portion (P1) du programme sont autorisées à être interprétées par la machine virtuelle (M) à l'aide de code machine pour exécuter le programme (P).

14. Produit programme d'ordinateur (P) selon la revendication 13, dans lequel les données de droits d'interprétation (DR) comprennent :
• des données de localisation adaptées pour localiser la portion du programme au sein du programme, et
• une donnée d'intégrité relative aux données de localisation de la portion de programme.

15. Produit programme d'ordinateur (P) selon l'une des revendications 13 à 14, de type applet Java Card, dans lequel la portion du programme est un composant de l'applet qui est de type « method_component ».

## Patentansprüche

1. Verfahren zum Ausführen eines Programms (P), das dazu bestimmt ist, von einer virtuellen Maschine (M) interpretiert zu werden, wobei das Verfahren Schritte umfasst des:
- Bestimmens (102) einer Referenzcodeanweisung, die im Laufe der Ausführung des Programms interpretiert werden soll,
- Interpretierens (112) der Referenzcodeanweisung durch die virtuelle Maschine mithilfe von Maschinencode, wobei das Verfahren **dadurch gekennzeichnet ist, dass** es Schritte umfasst des
- Lesens (106) von Interpretationsrechtsdaten (DR), die einen Abschnitt des Programms (P1) angeben, der Codeanweisungen enthält, die von der virtuellen Maschine interpretiert werden können,
- auf der Basis der gelesenen Daten, Überprüfens des Vorhandenseins (110) der Referenzcodeanweisung im Abschnitt (P1) des Programms (P), wobei das Interpretieren der Referenzcodeanweisung von der virtuellen Maschine (M) nur dann umgesetzt wird, wenn die Referenzcodeanweisung im Abschnitt (P1) des Programms (P) enthalten ist.

2. Verfahren nach Anspruch 1, wobei das Überprüfen des Vorhandenseins (110) für jede Referenzcodeanweisung umgesetzt wird, die als im Laufe der Ausführung des Programms zu interpretieren bestimmt (102) wurde.

3. Verfahren nach Anspruch 1, das ein Verifizieren (104) von mindestens einer Bedingung umfasst, die von der Referenzcodeanweisung erfüllt oder nicht erfüllt werden kann, wobei das Überprüfen des Vorhandenseins (110) nur dann umgesetzt wird, wenn die Bedingung erfüllt ist.

4. Verfahren nach Anspruch 3, wobei die Bedingung erfüllt ist, wenn:
- die Referenzcodeanweisung eine Anweisung zum Sprung von einem ersten Programmbasisblock zu einem anderen Programmbasisblock ist, wie etwa eine Verzweigungsanweisung, eine Methodenaufrufanweisung, oder eine Methodenrückkehranweisung, oder
- die Referenzcodeanweisung eine Anweisung zum Schreiben in einen nicht flüchtigen Speicher (8) ist, oder
- wenn das Programm in einer elektronischen Vorrichtung (1) ausgeführt wird, die Referenzcodeanweisung an einer Kommunikation von Daten zwischen der elektronischen Vorrichtung (1) und einer anderen Vorrichtung mitwirkt.

5. Verfahren nach Anspruch 1, wobei der Schritt des Überprüfens des Vorhandenseins (110) abhängig von einem Ergebnis einer Zufallsziehung umgesetzt oder nicht umgesetzt wird.

6. Verfahren nach einem der vorstehenden Ansprüche, das Schritte umfasst des:
- Lesens, in den Interpretationsrechtsdaten (DR), von Lokalisierungsdaten, die dafür geeignet sind, den Abschnitt des Programms zu lokalisieren,
- Lesens, in den Interpretationsrechtsdaten (DR), von Integritätsdaten, die sich auf die Lokalisierungsdaten beziehen,
- Überprüfens der Integrität (108) der Lokalisierungsdaten auf der Basis der Integritätsdaten, wobei die Referenzcodeanweisung nur dann interpretiert (112) wird, wenn im Laufe der Integritätsüberprüfung bestimmt wird, dass die Lokalisierungsdaten integer sind.

7. Verfahren nach einem der Ansprüche 1 bis 6, wobei die virtuelle Maschine (M) von mindestens einem Prozessor (2) ausgeführt wird, und wobei der Schritt des Überprüfens des Vorhandenseins (110) von einer Schaltung (12) umgesetzt wird, die sich von jedem Prozessor (2) unterscheidet.

8. Virtuelle Maschine (M), die Programmcodeanweisungen für das Ausführen der Schritte des Verfahrens nach einem der Ansprüche 1 bis 7 umfasst, wenn dieses Verfahren von mindestens einem Prozessor (2) ausgeführt wird.

9. Elektronische Vorrichtung (1) wie etwa eine Chipkarte, umfassend:
- mindestens einen Prozessor (2), der dafür konfiguriert ist, eine virtuelle Maschine (M) nach dem vorstehenden Anspruch auszuführen,
- mindestens ein Programm (P), das dazu bestimmt ist, von der virtuellen Maschine (M) interpretiert zu werden.

10. Verfahren zum Installieren eines Programms (P), das dazu bestimmt ist, von einer virtuellen Maschine nach Anspruch 8 (M) in einem nicht flüchtigen Speicher (8) interpretiert zu werden, wobei das Verfahren Schritte umfasst des:
- Zerlegens des Programms (P) in einen ersten Abschnitt (P1), der Codeanweisungen umfasst, die von der virtuellen Maschine interpretiert werden können, und einen Restabschnitt (P2),
- Lesens von Interpretationsrechtsdaten (DR), die der virtuellen Maschine angeben, dass nur Codeanweisungen, die in einem vorbestimmten Bereich (Z) des nicht flüchtigen Speichers (8) enthalten sind, von der virtuellen Maschine (M) mithilfe von Maschinencode interpretiert werden dürfen,
- Speicherns des ersten Programmabschnitts (P1) im vorbestimmten Bereich (Z) des nicht flüchtigen Speichers (8),
- Speicherns des Restabschnitts (P2) des Programms in einem Bereich, der sich vom vorbestimmten Bereich (Z) unterscheidet.

11. Installationsprogramm (IN), das Programmcodeanweisungen für das Ausführen der Schritte des Verfahrens nach Anspruch 10 umfasst, wenn dieses Verfahren von mindestens einem Prozessor (2) ausgeführt wird.

12. Verfahren zum Erzeugen eines Programms (P), das dazu bestimmt ist, von einer virtuellen Maschine nach Anspruch 8 (M) interpretiert zu werden, umfassend Schritte des
- Erzeugens eines Programmabschnitts (P1), der Codeanweisungen enthält, die von der virtuellen Maschine (M) interpretiert werden können,
- Erzeugens von Interpretationsrechtsdaten, die dafür konfiguriert sind, der virtuellen Maschine (M) anzugeben, dass nur die Codeanweisungen, die im Programmabschnitt (P1) enthalten sind, von der virtuellen Maschine mithilfe von Maschinencode interpretiert werden dürfen, um das Programm (P) auszuführen.

13. Computerprogrammprodukt (P), das dazu bestimmt ist, von einer virtuellen Maschine nach Anspruch 8 (M) interpretiert zu werden, umfassend:
- einen Programmabschnitt (P1), der Codeanweisungen enthält, die von der virtuellen Maschine (M) interpretiert werden können,
- Interpretationsrechtsdaten (DR), die dafür konfiguriert sind, der virtuellen Maschine (M) anzugeben, dass nur die Codeanweisungen, die im Abschnitt (P1) des Programms enthalten sind, von der virtuellen Maschine (M) mithilfe von Maschinencode interpretiert werden dürfen, um das Programm (P) auszuführen.

14. Computerprogrammprodukt (P) nach Anspruch 13, wobei die Interpretationsrechtsdaten (DR) umfassen:
- Lokalisierungsdaten, die dafür geeignet sind, den Abschnitt des Programms innerhalb des Programms zu lokalisieren, und
- Integritätsdaten, die sich auf die Lokalisierungsdaten des Programmabschnitts beziehen.

15. Computerprogrammprodukt (P) nach einem der Ansprüche 13 bis 14 vom Typ Java Card-Applet, wobei der Abschnitt des Programms eine Komponente des Applets ist, die vom Typ "method_component" ist.

## Claims

1. A method for executing a program (P) intended to be interpreted by a virtual machine (M), the method comprising steps of:
• determining (102) a reference code instruction to be interpreted when executing the program,
• interpreting (112), by the virtual machine, the reference code instruction using machine code,
the method being **characterized in that** it comprises steps of:
• reading (106) data on interpretation rights (DR) indicating a portion (P1) of the program containing code instructions interpretable by the virtual machine,
• on the basis of the data read, checking the presence (110) of the reference code instruction in the portion (P1) of the program (P), the interpretation of the reference code instruction being carried out by the virtual machine (M) only if the reference code instruction is contained in the portion (P1) of the program (P).

2. The method according to claim 1, wherein the presence check (110) is carried out for each reference code instruction determined (102) as having to be interpreted when executing the program.

3. The method according to claim 1, comprising a verification (104) of at least one condition which may or may not be met by the reference code instruction, wherein the presence check (110) is carried out only if the condition is met.

4. The method according to claim 3, wherein the condition is met when:
• the reference code instruction is a jump instruction from a first basic program block to another basic program block, such as a branch instruction, method invoke instruction or method return instruction, or
• the reference code instruction is a write instruction in a non-volatile memory (8), or
• the program being executed in an electronic device (1), the reference code instruction takes part in communication of data between the electronic device (1) and another device.

5. The method according to claim 1, wherein the presence check step (110) is or is not carried out depending on a result of random drawing.

6. The method according to one of the preceding claims, comprising steps of:
• reading, in the data on interpretation rights (DR), location data adapted to locate the portion of the program,
• reading, in the data on interpretation rights (DR), an integrity datum relating to the location data,
• checking the integrity (108) of location data on the basis of the integrity datum, the reference code instruction being interpreted (112) only if it is determined at the integrity check that the location data are intact.

7. The method according to one of claims 1 to 6, wherein the virtual machine (M) is executed by at least one processor (2), and wherein the presence check step (110) is carried out by a different circuit (12) of each processor (2).

8. A virtual machine (M) comprising program code instructions to execute the steps of the method according to one of claims 1 to 7, when this method is executed by at least one processor (2).

9. An electronic device (1), such as a smart card, comprising:
• at least one processor (2) configured to execute a virtual machine (M) according to the preceding claim,
• at least one program (P) intended to be interpreted by the virtual machine (M).

10. A method for installing a program (P) intended to be interpreted by a virtual machine according to claim 8 (M) in a non-volatile memory (8), the method comprising steps of:
• splitting the program (P) into a first portion (P1) comprising code instructions interpretable by the virtual machine and a remaining portion (P2),
• reading data on interpretation rights (DR) indicating to the virtual machine that only code instructions contained in a predetermined region (Z) of the non-volatile memory (8) are allowed to be interpreted by the virtual machine (M) using machine code,
• storing the first program portion (P1) in the predetermined region (Z) of the non-volatile memory (8),
• storing the remaining portion (P2) of the program in a region different from the predetermined region (Z).

11. An installer (IN) comprising program code instructions to execute the steps of the method according to claim 10, when this method is executed by at least one processor (2).

12. A method for generating a program (P) intended to be interpreted by a virtual machine according to claim 8 (M), comprising steps of:
• generating a program portion (P1) containing code instructions interpretable by the virtual machine (M),
• generating data on interpretation rights configured to indicate to the virtual machine (M) that only the code instructions contained in the program portion (P1) are allowed to be interpreted by the virtual machine using machine code to execute the program (P).

13. A computer program product (P) intended to be interpreted by a virtual machine according to claim 8 (M), comprising:
• a program portion (P1) containing code instructions interpretable by the virtual machine (M),
• data on interpretation rights (DR) configured to indicate to the virtual machine (M) that only the code instructions contained in the portion (P1) of the program are allowed to be interpreted by the virtual machine (M) using machine code to execute the program (P).

14. The computer program product (P) according to claim 13, wherein the data on interpretation rights (DR) comprise:
• location data adapted to locate the portion of the program within the program, and
• an integrity datum relating to the location data of the program portion.

15. The computer program product (P) according to one of claims 13 to 14, of the Java Card applet type, wherein the portion of the program is a component of the applet and is of the "method_component" type.
